# EUROPEAN PATENT SPECIFICATION

(11) **EP 0 566 577 B1**
(45) Date of publication and mention of the grant of the patent: **21.09.1994**
(21) Application number: 91919658.4
(22) Date of filing: 07.11.1991
(51) Int. Cl.: A01K 5/02

(54) **APPARATUS FOR SUPPLYING A FEEDING TROUGH**
FUTTERTROGVERSORGUNGSEINRICHTUNG
APPAREIL SERVANT A ALIMENTER UNE AUGE DE NOURRITURE

(30) Priority: 07.11.1990 NL 9002420
(43) Date of publication of application: 27.10.1993
(73) Proprietor: AGMAT B.V., NL-5469 EM Erp (NL)
(72) Inventor: VAN KAATHOVEN, Hendrikus Theodorus, NL-5469 NX Boerdonk (NL)
(74) Representative: Smulders, Theodorus A.H.J., Ir.
(86) International application number: NL9100221
(87) International publication number: WO9208343

(56) References cited:
- WO-A-88/09119
- US-A- 1 816 031
- US-A- 4 313 397
- WESTFALIA SEPARATOR "DER MOBILE COMPUTERGESTEUERTE KRAFTFUTTERAUTOMAT FÜR DEN ANBINDESTALL", 1 May 1989, WESTFALIA SEPARATOR, OELDE (DE)

## Description

The invention relates to an apparatus for supplying at least one feeding trough for animals, which apparatus comprises a trolley which can be moved along a guide and comprises a controllable drive, the trolley is provided with at least one wheel which serves both for the drive and for distance measurement. These features are set forth in the preamble portion of claim 1 and are known from German document "Westfalia Separator" 1 MAY 1989, OELDE.

Such an apparatus is further known from Italian patent specification 1,210,755. In this known apparatus, the trolley is supported by four wheels coupled in pairs, by means of which the trolley can be moved along a two-track rail above and along a plurality of feeding stations. The trolley can now move between these feeding stations and a centrally arranged bunker. In the known apparatus, the assembly is designed to be computer-controlled, i.e., after the trolley has been filled, it is moved to a preselected feeding station, discharges its load, and subsequently returns to the bunker. The drive of the trolley occurs via one of the two pairs of wheels, while the other pair of wheels serves for distance measurement, for instance by means of a pulse counter.

A disadvantage of this known apparatus is that it presents problems in negotiating curves in the guide, since the distance traveled by the outer wheels is always greater than the distance traveled by the inner wheels.

A further disadvantage is that the construction is costly. A still further disadvantage is that problems arise when the wheels are loaded unevenly as a result of tilting or swinging at higher speeds.

The object of the invention is to remove these disadvantages.

To that end, the apparatus of the type described in the preamble is characterized in that the guide consists of a monorail and the trolley is provided with a single wheel designed as a carrier for the trolley, which carrier is further equipped with a plurality of guide rollers which lock the carrier in the direction of transport. In this manner, a construction is obtained which prevents the trolley from swinging in curves at higher speeds.

The carrier may comprise eight guide rollers by means of which the carrier can be locked in lateral direction relative to the monorail.

To prevent the carrier from tilting upon deceleration and acceleration, the carrier may also comprise two spaced carrier or guide rollers having their axis disposed horizontally. The rollers are preferably located at the two lateral ends of the carrier.

Adjacent the top of the carrier a suspension wheel may be provided which serves simultaneously as a drive wheel and as a measuring wheel: in this manner it can be ensured that the carrier with the load is located vertically under the guide rail. Because the carrier and the trolley weigh down from this wheel, there will be no slip between the wheel and the guide rail during the drive of the wheel: in this manner this wheel can also serve for measuring the distance. It will be clear that under these conditions, the wheel is preferably made of or provided with a rubber circumferential surface.

For measuring the correct distance, a pulse counter can be used in a known manner.

In further elaboration of the invention, a hollow monorail can be used so as to achieve minimum weight of the assembly. Because the carrier is in contact with the guide rollers only at the top and bottom thereof, the sides of the monorail remain free during passage of the carrier, which permits easy mounting of the rail.

To clarify the invention, one embodiment of the feeding apparatus will now be described with reference to the accompanying drawings, in which the bunker has been omitted for clarity. In said drawings:

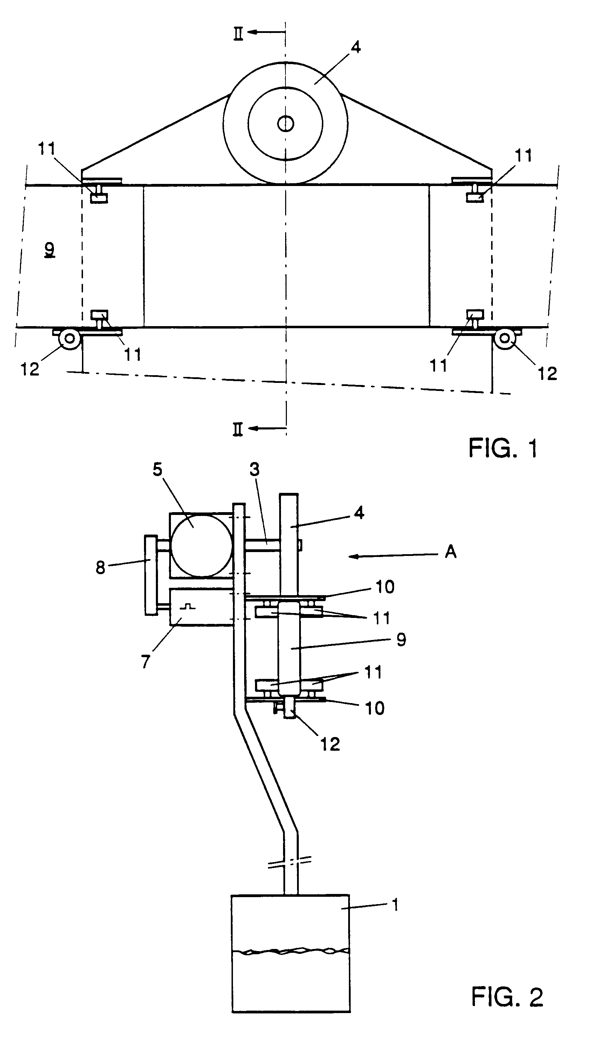

Fig. 1 is a diagrammatic side elevation of a part of a feeding apparatus according to the invention;
Fig. 2 is a section taken on the line II-II of Fig. 1;
Fig. 3 is a view of the entire feeding apparatus; and

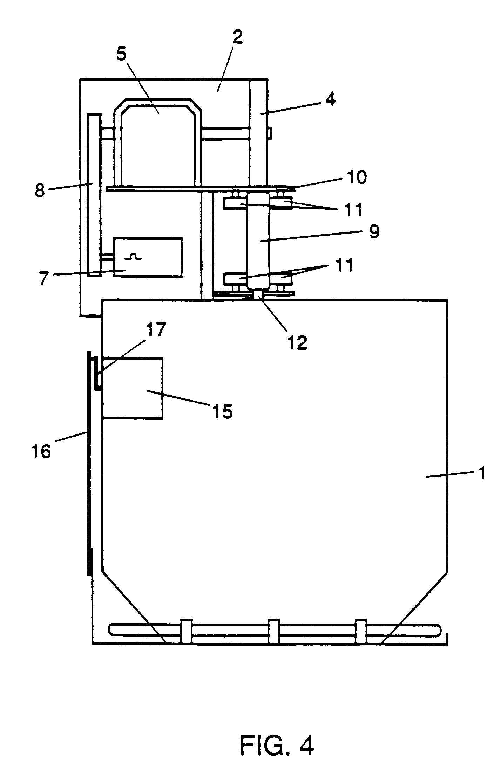

Fig. 4 is a diagrammatic side elevation of the apparatus similar to that of Fig. 3, which accordingly shows a great similarity to the apparatus shown in Fig. 2.

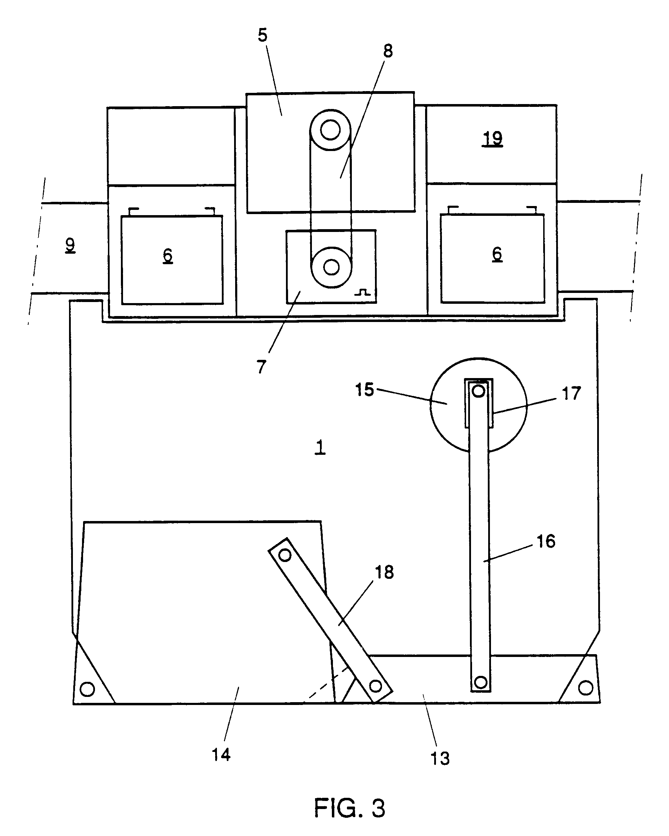

Referring to the drawings, a feeding apparatus comprises a trolley 1 supported by a carrier 2. The carrier 2 comprises a shaft 3 with a suspension wheel 4. The suspension wheel 4, which also serves as a transport and measuring wheel, is driven by means of the shaft 3 driven by a motor 5 which is supplied by batteries 6, for instance (see Fig. 3). Further, the apparatus comprises a pulsator 7 which is coupled with the motor 5 via a transmission apparatus 8. In this manner, the distance traveled by the transport wheel 4 can be accurately measured.

As will appear further from the drawings, the transport apparatus comprises a rail 9 rigidly connected to the wall or ceiling through means mounted laterally thereon (not shown). The carrier 2 further comprises two support plates 10 having mounted thereon a plurality of guide rollers 11 having their axis oriented in vertical direction. In this manner it is ensured that the carrier remains in contact with the guide rail in lateral direction and will not swing, in particular when negotiating curves.

To prevent the carrier from swinging in forward or backward direction upon deceleration or acceleration, use is made of two guide rollers 12 spaced apart as far as possible.

In the overall view shown in Fig. 3 like elements are naturally indicated by like reference numerals. Further, in this apparatus, the batteries 6 are shown as well as the printed cards 19 which are necessary for computer control of the assembly. These elements are not shown in further detail, since they are well known in the field of electronics. In this connection, further reference is made to Italian patent specification 1,210,755 in which the complete electrical control diagram is shown. A similar apparatus could also be used in the present apparatus.

Fig. 3 further shows the manner in which the trolley 1 is unloaded. This trolley 1 comprises at the bottom thereof a discharge opening consisting of two flaps 13, 14. The operation of the discharge flaps is for instance effected by means of a schematically shown motor 15 comprising an eccentric 17. This eccentric operates a rod 16 which in turn is pivotally connected to the discharge flap 13. The discharge flap 13 is pivotally connected to the trolley. The discharge flap 14 is also pivotally connected to the trolley 1 and at its other end is provided with a lever 18 whose other end in turn is connected to the discharge flap 13. In this manner, upon movement of the discharge flap 13, the discharge flap 14 will automatically move along with it and likewise be opened or closed.

It will be clear from the foregoing that the construction is so designed that the location of the centre of gravity of the trolley with contents does not influence the movements of the trolley, in other words, no swinging will occur in this apparatus, not even when it passes through a curve at increased speed, for instance 20m/min.

## Claims

1. An apparatus for supplying at least one feeding trough for animals, which apparatus comprises a trolley which can be moved along a guide and comprises a controllable drive, the trolley being provided with at least one wheel which serves both for the drive and for distance measurement, characterized in that the guide consists of a monorail and the trolley is provided with a single wheel designed as a carrier for the trolley, which carrier is further equipped with a plurality of guide rollers which lock the carrier in the direction of transport.

2. An apparatus as claimed in claim 1, characterized by a plurality of guide rollers, preferably eight, for lateral locking relative to the monorail.

3. An apparatus as claimed in claim 1 or 2, characterized in that the trolley comprises two spaced carrying or guide rollers having a horizontally extending axis.

4. An apparatus as claimed in one or more of the preceding claims, characterized in that the carrier is fitted with a single suspension wheel, which can also serve as a drive and measuring wheel.

5. An apparatus as claimed in claim 4, characterized in that the circumferential surface of the suspension wheel is provided with a material having a very high coefficient of friction.

6. An apparatus as claimed in claim 4 or 5, characterized in that the distance traveled by the carrier is measured in a known manner by means of a pulse counter.

7. An apparatus as claimed in one or more of the preceding claims, characterized in that use is made of a hollow monorail.

## Patentansprüche

1. Vorrichtung zur Versorgung von mindestens einem Futtertrog für Tiere, die einen Förderwagen umfaßt, der entlang einer Führung bewegbar ist und einen steuerbaren Antrieb bestitzt und der mit mindestens einem Rad versehen ist, das sowohl für den Antrieb als auch für die Abstandsmessung dient, dadurch gekennzeichnet, daß die Führung aus einer Einzelschiene besteht und der Förderwagen mit einem einzelnen Rad versehen ist, das als Trageinrichtung für den Förderwagen dient, wobei diese Trageinrichtung außerdem mit mehreren Führungsrollen ausgerüstet ist, die sie in der Transportrichtung festlegen.

2. Vorrichtung nach Anspruch 1, gekennzeichnet durch mehrere Führungsrollen, vorzugsweise acht für die seitliche Festlegung an der Einzelschiene.

3. Vorrichtung nach Anspruch 1 oder 2, dadurch gekennzeichnet, daß der Führungswagen (2) im Abstand zueinander angeordnete Trag- oder Führungsrollen besitzt, die eine sich horizontal erstreckende Achse aufweisen.

4. Vorrichtung nach einem oder mehreren der vorhergehenden Ansprüche, dadurch gekennzeichnet, daß die Trageinrichtung mit einem einzelnen Aufhängerad versehen ist, das sowohl als Antriebs- als auch als Meßrad dient.

5. Vorrichtung nach Anspruch 4, dadurch gekennzeichnet, daß die Umfangsfläche des Aufhängerades mit einem Material versehen ist, das einen hohen Reibungskoeffizienten aufweist.

6. Vorrichtung nach Anspruch 4 oder 5, dadurch gekennzeichnet, daß die von der Trageinrichtung zurückgelegte Entfernung in bekannter Weise über einen Pulszähler gemessen wird.

7. Vorrichtung nach einem oder mehreren der vorhergehenden Ansprüche, dadurch gekennzeichnet, daß eine hohle Einzelschiene verwendet wird.

## Revendications

1. Appareil servant à alimenter au moins une auge de nourriture pour les animaux, comprenant un chariot susceptible d'être déplacé le long d'un dispositif de guidage et comprenant un mécanisme d'entraînement commandable, le chariot étant muni d'au moins une roue qui sert à la fois pour l'entraînement et pour mesurer la distance parcourue, caractérisé en ce que le dispositif de guidage consiste an un monorail et en ce que le chariot est équipé d'une seule roue conçue comme support du chariot, ledit support étant lui-même équipé d'un ensemble de galets de guidage permettant de bloquer le support dans le sens du transport.

2. Appareil selon la revendication 1, caractérisé par un ensemble de galets de guidage, de préférence huit, permettant de bloquer latéralement le support par rapport au monorail.

3. Appareil selon les revendications 1 ou 2, caractérisé en ce que le chariot comprend deux galets de support ou de guidage agencés selon un axe horizontal.

4. Appareil selon l'une ou plusieurs des revendications précédentes, caractérisé en ce que le support est équipé d'une seule roue à suspension qui peut également servir de roue d'entraînement et de mesure.

5. Appareil selon la revendication 4, caractérisé en ce que la surface périphérique de la roue à suspension est revêtue d'un matériau dont le coefficient do friction est très élevé.

6. Appareil selon les revendications 4 ou 5, caractérisé en ce que la distance parcourue par le support est mesurée de manière connue au moyen d'un compteur d'impulsions.

7. Appareil selon l'une ou plusieurs des revendications précédentes, caractérisé en ce que l'on utilise un monorail creux.
